Europäisches Patentamt

European Patent Office

Office européen des brevets

(11) Publication number: 0 217 550
A1

# EUROPEAN PATENT APPLICATION

(21) Application number: 86306756.7

(22) Date of filing: 02.09.86

(51) Int. Cl.4: H01M 2/26 , H01M 2/24 , H01M 10/16

(30) Priority: 03.10.85 US 783359

(43) Date of publication of application:
08.04.87 Bulletin 87/15

(84) Designated Contracting States:
DE FR GB

(71) Applicant: GENERAL MOTORS CORPORATION
General Motors Building 3044 West Grand
Boulevard
Detroit Michigan 48202(US)

(72) Inventor: Bish, James R.
2019 Winding Way
Anderson Indiana 46011(US)
Inventor: McCartney, Charles P.
RR No. 2 Box 511
Yorktown Indiana 47396(US)

(74) Representative: Haines, Arthur Donald et al
Patent Section (F6) Vauxhall Motors Limited
P.O. Box 3 Kimpton Road
Luton, Beds. LU2 OSY(GB)

(54) Galvanic cell.

(57) A galvanic cell stack (2) includes a plurality of alternately interleaved positive (4) and negative (6) polarity plates, each including a conductive lug (l0) projecting therefrom for electrically coupling to other plates of like polarity in the cell stack (2). Each set of like polarity plate lugs (l0) includes a polymeric strip (22) pressure-moulded in situ about the roots (12) of the lugs (l0).

Fig.1

## GALVANIC CELL

This invention relates to galvanic cells for electric storage batteries and more particularly to the electrochemically active cell elements therefore.

Electric storage batteries (e.g., lead-acid batteries for motor vehicles) comprise several galvanic cells, each comprising an electrochemically active cell element immersed in electrolyte. Each cell element comprises a stack of alternating positive and negative polarity plates interleaved one with the other and separated one from the other by a thin microporous sheet known as a separator. In lead-acid batteries, these plates comprise a lead-containing material (i.e., lead dioxide, $PbO_2$, for the positive plates and lead, $Pb$, for the negative plates) pasted onto a reticulated alloy structure called a grid. The grid supports the active material relative to the other plates in the cell element and serves to conduct electrical current throughout the plate. The grids each have a lug projecting therefrom which serves as a means to couple the plate to other plates of like polarity within the cell element and ultimately to a cell element in the adjacent cell compartment of the battery container. In some instances, the plate lugs are simply bundled and welded together through an aperture in an internal wall of the container (e.g. see Figure 5 of US-A-4,046,062). More typically, however, the plate lugs are electrically joined one to the other by a bar of lead, known as a plate strap, which is welded to, or cast about the plate lugs, such as is depicted in Figure 2 of US-A-4,046,062.

It has heretofore been proposed to position preformed strips of insulating material over the lugs of each set of aligned positive or negative plate lugs (e.g., see US-A-2,287,802). Each preformed strip includes precut slots therein so located across the face of the strip as to register with the lugs at the time the strip is placed over the lugs. These strips have served to facilitate manufacturing (e.g., maintain alignment and spacing of the lugs), to strengthen and stabilise the stack, and to prevent accidental internal short-circuiting of the cell by keeping the plates of one polarity away from the plate strap of the opposite polarity plates as may occur, for example, where there is excessive positive plate growth in service. It has likewise been proposed to position a preformed pre-slotted trough over the plate lugs to form a mould for casting the plate strap onto the lugs during battery assembly (e.g., see US-A-3,988,l69).

Consistently positioning a pre-slotted, preformed strip/trough over a plurality of lugs using automated assembly equipment is extremely difficult to do at commercially acceptable production rates. In this regard, it is difficult for production equipment to accurately register all the slots consistently with the various lugs and then actually to place the strip/trough over the lugs. Indeed, the slightest misalignment of even one of the lugs with respect to its corresponding slot will prevent proper placement of the strip/trough and result in an improperly assembled plate stack and ultimately a rejected battery. Accordingly, to ensure an acceptable success rate in automatic placement of the strips/troughs onto the lug sets, the slots must be made longer and wider then the lugs with which they mate. Such oversized slots, however, result in a loose or sloppy fit of the strip/trough on the lugs which often defeats the intended purpose of the strip/trough. For example, a loose-fitting strip cannot provide precise accurate alignment or spacing of the lugs which in turn can effect subsequent manufacturing operations. Moreover, loose-fitting strips preclude the effective use thereof as a means for stabilising or strengthening the plate stack against damage during subsequent in-plant handling or in-service use of the battery. Finally, a loose-fitting trough will not provide an adequate seal for containing molten lead cast about the lugs to form a plate strap when the trough is used as a plate strap mould according to the process of US-A-3,988,l69.

Hence, it is an object of the present invention to provide a galvanic cell element with a tightly-fitting strip of insulating material about the plate lugs. It is a further object of the present invention to provide a galvanic cell having such a strip anchored at its ends to the walls of the battery container to provide shock/vibration resistance to the cell element. It is a still further object of the present invention to provide a process for assembling battery plate stacks including pressure-moulding of a strip of insulator material in situ in and about the roots of the battery plate lugs after the plates have been interleaved one with the other. These and other objects and advantages of the present invention will become more readily apparent from the detailed description thereof which follows.

Brief Description of the Invention

The present invention comprehends a strip of insulating polymeric material (e.g., thermoplastic or thermosetting synthetic resin) pressure-moulded - (e.g., injection-moulded) in and about the roots of previously aligned and positioned battery plate lugs so that the strip tightly engages and firmly holds the lugs in precise alignment with, and spaced from, each other. Moulding the strip in situ about the lugs eliminates the need to attempt to automatically register a pre-slotted strip with a set of aligned plate lugs after the stack has been assembled. Process-wise, the positive and negative polarity plates are first interleaved one with the other and with intervening separators in the conventional manner of assembling such battery plate stacks. Each plate has a lug projecting therefrom. Stacking of the plates is carried out so that all the positive plate lugs and negative plate lugs are aligned as separate sets along the side of the stack. A comb-like positioning jig, or similar arrangement, interdigitates with the lugs of each positive and negative set of lugs and serves to precisely align and space them one from the other. With the lugs held firmly and accurately in place by the positioning jig, a mould is positioned between and about the roots of the lugs in each positive and negative polarity set of lugs and the insulating polymeric material injected into the mould under pressure. The injected insulating material fills the mould cavity and compressively engages the roots of the lugs. After cooling, the jig and mould are removed, leaving the lugs firmly and immovably embedded within the insulating strip. The roots of the lugs will preferably have a notch formed therein to receive the moulded polymer and thereby more firmly secure the strip to the lugs. The strip thus moulded significantly strengthens and stabilises the stack against vibration or handling damage and may itself be secured to the walls of the cell compartment for firmly anchoring the cell stack in the compartment for even more resistance to damage. Finally, the strip may be moulded with upstanding flanges along the longitudinal edges thereof, which flanges, acting in concert with the strip itself, form a trough into which plate strap forming metal (e.g., lead) may be cast and shaped.

## Detailed Description of a Specific Embodiment

The present invention may better be understood when considered in the light of the following detailed description of certain specific embodiments thereof which are described hereinafter with reference to the accompanying drawings, in which:

Figure 1 is a perspective view of a stack of battery plates including a pressure-moulded strip made in accordance with the present invention;

Figure 2 depicts the plate stack of Figure 1 joined to a similar stack in an adjacent cell compartment of a battery container;

Figure 3 is a side-sectioned view through a battery like that depicted in Figure 2;

Figure 4 is a perspective view depicting a mould positioned about a set of like-polarity battery plate lugs preparatory to pressure-moulding the strip of the present invention;

Figure 5 is a side sectional view of Figure 4 taken in the direction 5-5;

Figure 6 is a plan view of the mould and lugs shown in Figure 4, following moulding and removal of the mould; and

Figure 7 is a perspective view of a portion of a battery plate stack depicting a trough moulded in and about the roots of the battery plate lugs.

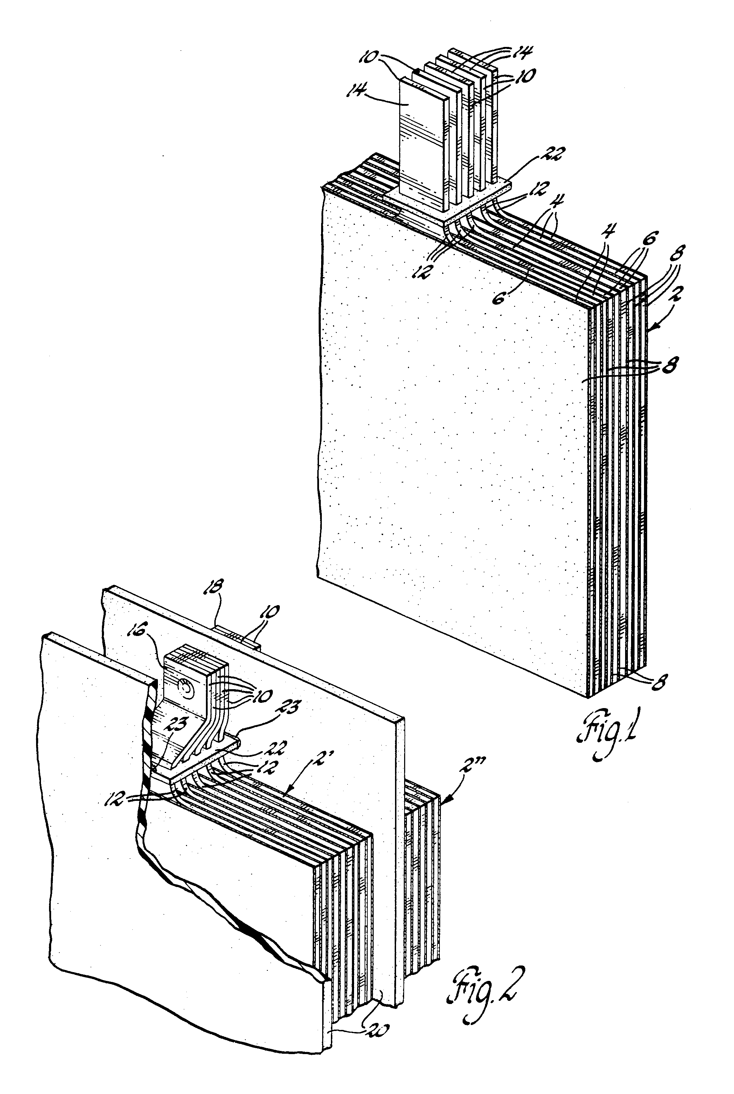

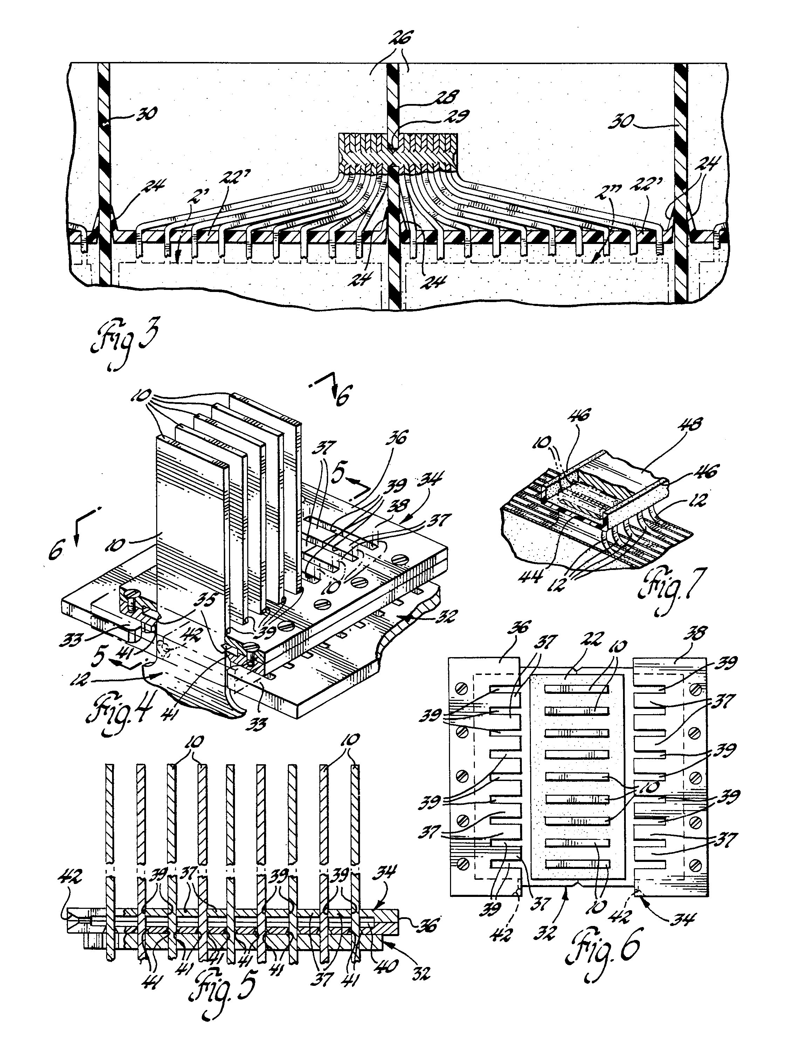

Figure 1 depicts a stack 2 of positive battery plates 4 interleaved with a plurality of negative battery plates 6 and intervening microporous separator sheets 8. Each of the plates 4, 6 includes an integral lug 10 (only positive lugs shown) projecting therefrom and aligned with other similar plate lugs projecting from plates of like polarity. Each lug 10 includes a root portion 12 proximate its associated plate and a distal portion 14 more remote from the plate and serving to electrically connect its associated plate with other plates of like polarity via their respective lugs 10. Figures 2 and 3, for example, illustrate one such connection (i.e., bundled and welded lugs), while Figure 7 illustrates another such connection (i.e., a plate strap cast/welded to the lugs). In accordance with the present invention, a strip of insulating material 22 is pressure-moulded directly to the roots 12 of the aligned lugs 10 as will be described in more detail hereafter.

Figure 2 depicts cell elements 2' and 2'' in adjacent cell compartments of an electric storage battery and separated one from the other by an intercell partition 20. A positive lug set 16 of cell element 2' is welded to a negative lug set 18 of the cell element 2'' through an aperture in the partition 20 according to the method disclosed in US-A-4,046,062 (Figure 5). In this design, the lugs 10 of each set are first bundled together adjacent the partition 20, as shown, before welding the bundles together through the aperture. In this particular design, the insulating strip 22 (which was previously moulded about the roots 12 of the lugs 10) serves as a means for controlling the bending of the lugs 10 towards the partition 20. More particularly, the integrally-moulded strip 22 ensures that all the lugs of each set are bent in precisely the same manner and are not bent at their roots in such a manner as to contact the next adjacent plate of opposite polarity and thereby result in a short circuit between those plates. Beads of glue 23 may be applied to both ends of the strip 22 to securely anchor it (and hence the cell elements 2, 2' or 2'') to the partitions 20 for providing a significantly increased shock-resistant and vibration-resistant battery.

Figure 3 is a side sectional view of a portion of a battery whose intracell and intercell connections are made by welding the plate lugs together through the aperture 29 substantially as depicted in Figure 2. In this embodiment, however, the insulator strip 22′ includes tapered resilient lips 24 moulded onto each end thereof. The resilient lips 24 deflect when the plate stacks are inserted into their respective cell compartments 26 and serve not only to centre the stacks in the compartments during the assembly operation but also to tightly wedge the strip 22′ in place between partitions 28 and 30 defining the cell compartments 26 for firmly anchoring the stacks in the compartments without the need for glue or other fastening means.

Figures 4 and 5 depict a method of assembling the plate stacks with the insulator strips of the present invention. In this regard, the separate plates are first stacked together with their interplate separators in a conventional manner. Thereafter, the lugs 10 of each set are more precisely aligned, spaced one from the other and held in place by means of a jig 32 having comb-like jaws 33 which come together, interdigitate with the several lugs and hold them in place during the placement of a mould 34 over the tops of the lugs 10. The two comb-like jaws 33 reciprocate relative to each other between an open lug-release position shown in Figure 4 and a closed position for the placement of the mould 34 over the lugs. The lugs preferably include notches 35 on the edges thereof for receiving the pressure-moulded synthetic resin therein for better anchorage of the strip 22 to the lugs.

The mould 34 has two comb-like portions 36 and 38 which together define a mould cavity 40 for shaping the strip 22. The separate fingers 37 of the mould portions 36 and 38 define slots 39 which closely receive the lugs 10 therein. The underside of the slots 39 are bevelled at 41 to facilitate placement of the mould 34 about the lugs 10 by guiding the tips thereof into the slots 39. After the mould 34 has been positioned about the roots 12 (i.e., at the notches 35 when used) of the lugs 10, liquid synthetic resin is injected into the cavity 40 (see Figure 5) through an opening 42 at one end of the mould 34. Virtually any thermoplastic or thermosetting synthetic resin may be used to form the strip 22. For Pb-acid batteries used in motor-vehicles, the same polypropylene material as is used to form the battery container is preferred for simplicity and economy reasons. However, in some applications, e.g. where the strip 22 will be exposed to high temperatures, a more temperature-resistant synthetic resin (e.g., polyphenylene sulfide) may be used. In other situations, thermosetting resin material will be the better choice. After the resin has cooled and solidified, the mould 34 is removed by separating the mould halves 36 and 38, as best shown in Figure 6. The strip 22 thus moulded remains in place tightly engaging the lugs 10 in what amounts to essentially a shrink fit. As a result, the lugs 10 are now firmly anchored against even minor amounts of misalignment or movement relative to one another. The relationship thus established between the lugs will remain constant throughout all further processing during manufacture of the battery and during service use of the battery.

Figure 7 depicts a somewhat different use for the pressure-moulded strip of the present invention. In this embodiment, a strip 44 includes upstanding flanges 46 extending along the longitudinal edges thereof. The flanges 46 and strip 44 together form a trough for receiving and shaping molten metal (e.g., lead) subsequently cast therein to form a plate strap 48 for the stack.

## Claims

1. A galvanic cell including a stack (2) of positive (4) and negative (6) polarity plates alternately interleaved with one another, a conductive lug (10) projecting from each one of said plates and being aligned with similar lugs of like polarity plates (4) along a side of said stack (2), the aligned lugs being joined electrically together in sets (16) of like polarity, and an insulating strip (22,44) positioned around and between said aligned lugs (10), characterised in that each lug (10) has a root portion (12) thereof proximate said plate and a distal portion - (14) contiguous said root portion (12) which electrically joins said lug (10) to adjacent aligned lugs, and said insulating strip (22,44) is a polymeric strip (22,44) pressure-moulded in-situ in and about said root portions (12) of each set (16) of aligned lugs - (10) so as to tightly engage said root portions (12) of the lugs (10) of each set (16) and to firmly secure said aligned lugs (10) together in fixed relationship one to the other and to insulate the set (16) from the plates (6) of opposite polarity.

2. A galvanic cell according to claim 1, characterised in that said root portion (12) of each lug (10) includes a notch (35) formed therein, and said strip (22) is moulded into said notch (35) so as to more firmly anchor said strip (22) to said lugs (10).

3. A galvanic cell according to claim 1, characterised in that said strip (44) includes upstanding flanges (46) extending along the longitudinal edges thereof and together therewith forms a trough containing a plate strap (48) which electrically joins the aligned lugs (10) of said set (16) of lugs.

4. A galvanic cell according to any one of claims 1 to 3, characterised in that said stack (2) is surrounded by walls (20) defining a compartment of a container of a battery containing said cell and at least one end of said strip (22) is anchored to a respective wall (20).

5. A galvanic cell according to any one of claims 1 to 3, <u>characterised</u> <u>in</u> <u>that</u> stack (2) is surrounded by walls (28,30) defining a compartment of a container of a battery containing said cell and said strip (22) includes a resilient lip (24) on each end thereof, said lips (24) being deflected into an interference fit with said walls (28,30) to firmly secure said stack (2) in said compartment.

Fig.1

Fig.2

Fig 3

Fig.4

Fig.5

Fig.6

Fig.7

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | GB-A-1 392 273 (YUASA BATTERY CO.) <br> * Figures 1,3,4; claim 1 * | 1 | H 01 M 2/26 <br> H 01 M 2/24 <br> H 01 M 10/16 |
| A | GB-A- 817 196 (VARLEY DRY ACCUMULATORS) <br> * Figures 3,4; page 2, lines 76-117 * | 1,3,4 | |
| A | US-A-3 396 056 (F.L.G.GONNARD) <br> * Figure 2; column 2, lines 31-47 * | 1 | |
| A | US-A-4 495 259 (TOSHIO UBA) <br> * Figures 1,2; column 3, lines 13-23; column 3, line 60 - column 4, line 25 * | 4 | TECHNICAL FIELDS SEARCHED (Int. Cl.4) |
| A | FR-A-2 308 211 (VARTA) <br> * Claims 1,2; figure 2 * | 4 | H 01 M |
| A | US-A-3 963 521 (OTTO JACHE) <br> * Figure 8; column 7, lines 1-42 * | 1 | |

The present search report has been drawn up for all claims

| Place of search | Date of completion of the search | Examiner |
|---|---|---|
| THE HAGUE | 16-12-1986 | D'HONDT J.W. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82